# FASCICULE DE BREVET EUROPEEN

(11) **EP 0 771 821 B1**
(45) Date de publication et mention de la délivrance du brevet: **13.02.2002**
(21) Numéro de dépôt: 96112322.1
(22) Date de dépôt: 31.07.1996
(51) Int. Cl.: C08F 10/00, C08F 4/609

(54) **Prépolymère pour la polymérisation des oléfines, associant plusieurs composantes catalytiques solides**
Aus mehreren festen Katalysatorbestandteilen bestehendes Prepolymer für die Olefinpolymerisation
Prepolymer for olefin polymerisation combining several solid catalyst components

(30) Priorité: 19.09.1995 FR 9510942
(43) Date de publication de la demande: 07.05.1997
(73) Titulaire: Atofina, 92800 Puteaux (FR)
(72) Inventeur: Malinge, Jean, 64300 Loubieng (FR)
(74) Mandataire: Leyder, Francis

(56) Documents cités:
- EP-A- 0 562 928
- EP-A- 0 604 401
- EP-A- 0 673 950
- FR-A- 2 541 683

## Description

La présente invention concerne un prépolymère pour la polymérisation des oléfines, ledit prépolymère réalisant une association de plusieurs composantes catalytiques solides pour la polymérisation des oléfines.

L'association de composantes catalytiques peut présenter un intérêt lorsque l'on souhaite combiner deux propriétés au sein d'un même polymère, l'une des propriétés étant apportée par l'une des composantes catalytiques, l'autre propriété étant apportée par l'autre composante catalytique. A titre d'exemple, il serait légitime de penser pouvoir obtenir un polymère de distribution des masses moléculaires élargie en utilisant à la polymérisation une association d'une composante catalytique générant des faibles masses moléculaires de polymère et d'une composante catalytique générant de fortes masses moléculaires.

L'association de plusieurs composantes catalytiques de polymérisation des oléfines à déjà été tentée. Le document EP 0 439 964 A2 décrit la préparation de composantes catalytiques solides contenant à la fois une composante à base de Mg, Cl et Ti et un dérivé d'un métal de transition ledit métal ayant pour ligand un groupement cycloalcadiène. Ce type de composante mène à des polymères aux distributions de masses moléculaires élargies.

Le brevet US 5,032,562 décrit la préparation de polyoléfines aux distributions des masses moléculaires multimodales grâce à l'emploi d'une composition catalytique comprenant un dérivé du magnésium comportant des liaisons Mg-OR, un dérivé du zirconium et TiCl₄.

La demande de brevet EP 447 070 A1 enseigne qu'une composante catalytique préparée par imprégnation de MgCl₂ par deux donneurs d'électrons puis ajout d'un métallocène du zirconium puis ajout de TiCl₄ mène, en polymérisation, à un polymère à la distribution des masses moléculaires bimodale.

L'association des composantes catalytiques ne peut être réalisée selon l'art antérieur que si l'une des composantes catalytiques est solide et l'autre liquide ou soluble dans un solvant organique, de façon à pouvoir imprégner la composante catalytique solide par la composante liquide ou sa solution organique.

L'art antérieur n'offre pas de solution satisfaisante lorsque l'on souhaite associer des composantes catalytiques solides et les mettre en oeuvre dans un procédé de polymérisation en suspension ou phase gaz. En effet, la demanderesse a constaté que si l'on met simplement en contact deux composantes catalytiques solides et que l'on mène une polymérisation en suspension ou phase gaz en présence du mélange de ces composantes catalytiques solides, on obtient un polymère inhomogène. En effet ce polymère est constitué d'un mélange de grains dont une partie est entièrement dérivée d'une de ces composantes catalytiques, l'autre partie de ces grains étant dérivée entièrement de l'autre composante catalytique. Cette inhomogénéïté des grains peut résulter en une inhomogénéïté de leur produit de transformation.

La demanderesse a maintenant trouvé une manière d'associer des composantes catalytiques solides, de façon à obtenir, par polymérisation en suspension ou en phase gaz, un polymère homogène. Cette association passe par la synthèse d'un prépolymère.

Par composante catalytique solide on entend, d'une façon générale et en particulier dans la présente demande, un ingrédient solide d'un système catalytique de polymérisation des oléfines, ledit ingrédient contenant un métal de transition, ledit métal de transition étant actif pour la polymérisation des oléfines. Le métal de transition est dit actif pour la polymérisation des oléfines lorsque la composante catalytique qui le contient catalyse la polymérisation des oléfines, le cas échéant grâce également à la présence dans le milieu de polymérisation d'autres ingrédients dudit système catalytique. A titre d'exemple, le titane contenu dans une composante catalytique solide classique de type Ziegler-Natta contenant des atomes de titane, chlore et magnésium, est le métal de transition et est actif pour la polymérisation des oléfines. En effet ce type de composante catalytique catalyse la polymérisation des oléfines, grâce au titane et grâce également à la présence dans le milieu de polymérisation d'un cocatalyseur, généralement un dérivé organique de l'aluminium, autre ingrédient du système catalytique dont la composante catalytique solide contenant le titane fait partie.

Le terme prépolymérisation est utilisé pour désigner la polymérisation menant à un prépolymère. Par prépolymère, on entend généralement le solide hydrocarboné actif ou polymère obtenu par prépolymérisation d'au moins une oléfine en présence d'une composante catalytique, ce solide représentant au plus dix pour cent de la masse du polymère que l'on souhaite finalement synthétiser par polymérisation d'au moins une oléfine en présence dudit prépolymère. Généralement, la cinétique de la prépolymérisation est contrôlée par contrôle du débit de la ou des oléfines destinées à être prépolymérisées. Généralement, le degré d'avancement de la prépolymérisation est inférieur ou égal à 10 000 grammes de prépolymère par millimole de métal de transition actif contenu dans la composante catalytique dont le prépolymère est issus. Ce degré d'avancement est calculé en prenant en compte la masse totale de polymère contenu dans le prépolymère. Ainsi, si la composante catalytique contient un polymère, le degré d'avancement est calculé en déterminant la somme de la masse de polymère formé pendant la prépolymérisation et de la masse de polymère contenu dans la composante catalytique de départ, puis en divisant cette somme par le nombre de moles de métal de transition contenu dans la composante catalytique de départ. L'usage du terme prépolymère implique nécessairement que le prépolymère considéré est actif pour la polymérisation des oléfines, c'est à dire qu'il catalyse la polymérisation des oléfines, le cas échéant en présence d'un cocatalyseur adapté, lequel peut être de même nature que le cocatalyseur utilisé lors de la polymérisation ayant conduit au prépolymère.

Le prépolymère selon l'invention, également appelé prépolymère AB, est obtenu par le procédé comprenant les étapes suivantes :
a) synthèse d'un prépolymère A par prépolymérisation A en suspension ou en phase gazeuse d'au moins une oléfine en présence d'une composante catalytique solide A, puis
b) ajout d'un dérivé organique liquide de l'aluminium puis d'une composante catalytique solide B sur le prépolymère A pour obtenir un agrégat, puis
c) prépolymérisation AB en phase gazeuse d'au moins une oléfine en présence de l'agrégat obtenu en b).

Le prépolymère selon l'invention associe donc la composante catalytique A et la composante catalytique B. Le prépolymère selon l'invention peut être engagé en polymérisation pour produire un polymère.

Le prépolymère selon l'invention est plus homogène que si l'on avait engagé en prépolymérisation un simple mélange des composantes catalytiques A et B.

Le polymère obtenu par polymérisation en suspension ou en phase gaz en présence du prépolymère AB est plus homogène que le polymère obtenu par polymérisation en présence d'un prépolymère lui-même obtenu à partir d'un simple mélange des composantes catalytiques A et B.

De plus, la manière d'associer les composantes catalytiques A et B permet d'influencer la morphologie du prépolymère selon l'invention par le choix de la morphologie de la composante catalytique A, sans que la morphologie de la composante catalytique B ne l'influence généralement de façon sensible.

Ainsi, à titre d'exemple, si l'on souhaite fabriquer un prépolymère AB de forme sensiblement sphérique, il est préférable de choisir une composante catalytique A de forme sensiblement sphérique.

De même, la manière d'associer les composantes catalytiques A et B permet d'influencer la morphologie du polymère obtenu par polymérisation en suspension ou en phase gaz en présence du prépolymère AB, par le choix de la morphologie de la composante catalytique A, sans que la morphologie de la composante catalytique B ne l'influence généralement de façon sensible.

Ainsi, à titre d'exemple, si l'on souhaite fabriquer un polymère de forme sensiblement sphérique, il est préférable de choisir une composante catalytique A de forme sensiblement sphérique, sans que la nature de la composante catalytique B n'influence sensiblement la morphologie du polymère final.

De plus, la manière d'associer les composantes catalytiques A et B permet de contrôler la distribution des tailles de particule du prépolymère selon l'invention par le choix de la distribution des tailles de particule de la composante catalytique A, sans que la distribution des tailles de particule de la composante catalytique B ne l'influence généralement de façon sensible.

De même, la manière d'associer les composantes catalytiques A et B permet de contrôler la distribution des tailles de particule du polymère obtenu par polymérisation en suspension ou en phase gaz en présence du prépolymère AB, par le choix de la distribution des tailles de particule de la composante catalytique A, sans que la distribution des tailles de particule de la composante catalytique B ne l'influence généralement de façon sensible.

Un autre avantage de l'invention est de pouvoir utiliser une composante catalytique B contenant de très fines particules sans que cela ne conduise à un prépolymère AB présentant de fines particules. En effet, il suffit de choisir une composante catalytique A sans fines particules pour que le prépolymère selon l'invention soit exempt de fines particules sans se préoccuper de la présence ou de l'absence de fines particules dans la composante catalytique B. Le polymère obtenu par polymérisation en suspension ou en phase gaz en présence du prépolymère AB sera également exempt de fines particules.

Les métaux de transition contenus dans les composantes catalytiques A et B, peuvent être choisis parmi les éléments des groupes 3b, 4b, 5b, 6b, 7b, 8, les lanthanides, les actinides, de la classification périodique des éléments, tels que définis dans le Handbook of Chemistry and Physics, soixante et unième édition, 1980-1981. Ces métaux de transition sont de préférence choisis parmi le titane, le vanadium, le hafnium, le zirconium ou le chrome.

Les composantes catalytiques A et B doivent être solides. Elles peuvent être de type Ziegler-Natta. Toute composante catalytique solide commercialisée de type Ziegler-Natta peut convenir. A titre d'exemple, une composante catalytique de type Ziegler-Natta peut se présenter sous la forme d'un complexe contenant au moins Mg, Ti et Cl, le titane se trouvant sous forme chlorée de Ti^{IV} et/ou de Ti^{III} et contenir éventuellement un donneur ou accepteur d'électrons.

Une composante catalytique de type Ziegler-Natta est habituellement le résultat de la combinaison d'au moins un composé du titane, un composé du magnésium, de chlore et éventuellement un composé d'aluminium et/ou un donneur ou accepteur d'électrons ainsi que de tout autre composé utilisable dans ce type de composante.

Le composé du titane est choisi habituellement parmi les composés chlorés du titane de formule Ti-(OR)ₓCl₄₋ₓ dans laquelle R représente un radical hydrocarboné aliphatique ou aromatique contenant de un à quatorze atomes de carbone, ou représente COR¹ avec R¹ représentant un radical hydrocarboné aliphatique ou aromatique contenant de un à quatorze atomes de carbone, et x représente un nombre entier allant de 0 à 3.

Le composé du magnésium est habituellement choisi parmi les composés de formule Mg(OR²)ₙCl₂₋ₙ, dans laquelle R² représente l'hydrogène ou un radical hydrocarboné linéaire ou cyclique et n représente un nombre entier allant de 0 à 2.

Le chlore présent dans la composante de type Ziegler-Natta peut provenir directement de l'halogénure de titane et/ou de l'halogénure de magnésium. Il peut également provenir d'un agent chlorant indépendant tel que l'acide chlorhydrique ou un halogénure organique comme le chlorure de butyle.

Le donneur ou accepteur d'électrons est un composé organique liquide ou solide connu pour entrer dans la composition de ces composantes catalytiques. Le donneur d'électrons peut être un composé mono ou polyfonctionnel avantageusement choisi parmi les acides carboxyliques aliphatiques ou aromatiques et leurs esters alkyliques, les éthers aliphatiques ou cycliques, les cétones, les esters vinyliques, les dérivés acryliques, en particulier acrylates d'alkyle ou méthacrylates d'alkyle et les silanes tels que les alcoxysilanes aromatiques, alicycliques ou aliphatiques. Conviennent notamment comme donneur d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle, le phényltriéthoxysilane, le cyclohexylméthyldiméthoxysilane et le dicyclopentyldiméthoxysilane. L'accepteur d'électrons est un acide de Lewis, choisi de préférence parmi le chlorure d'aluminium, le trifluorure de bore, le chloranile ou encore les alkylaluminiums, les halogénoalkylaluminium et alkylmagnésiums.

Les composantes catalytiques A et/ou B peuvent être un oxyde de chrome VI déposé sur un support inerte comme la silice.

Les composantes catalytiques A et/ou B peuvent être toute composante catalytique solide associant différentes composantes catalytiques.

Les composantes catalytiques A et/ou B peuvent être un prépolymère.

Les réactions de prépolymérisation et de polymérisation ont lieu en particulier grâce à la présence de métaux de transition contenus dans les composantes catalytiques ou prépolymères présents lors desdites prépolymérisation et polymérisation.

Suivant la nature des composantes catalytiques et donc des métaux de transition que celles-ci contiennent, il conviendra d'introduire les cocatalyseurs éventuellement nécessaires aux prépolymérisations ou polymérisations souhaitées. Le rôle de ces cocatalyseurs est bien connu de l'homme du métier. Leur présence dans le milieu de prépolymérisation et/ou de polymérisation peut être nécessaire pour activer les métaux de transition issus des composantes catalytiques utilisées.

D'une façon générale, un prépolymère contient les mêmes métaux de transition que la composante catalytique dont est issu ledit prépolymère après prépolymérisation en présence de ladite composante catalytique.

Ainsi, si la présence d'un cocatalyseur a été nécessaire pour activer un métal de transition contenu dans une composante catalytique lors d'une prépolymérisation, la présence d'un cocatalyseur pouvant être de même nature, sera également nécessaire lors de la polymérisation en présence de ce prépolymère car ce sont les mêmes métaux de transition qu'il convient d'activer à la prépolymérisation et à la polymérisation.

En conséquence:
- lors d'une prépolymérisation A, si nécessaire, au moins un cocatalyseur capable d'activer le ou les métaux de transition apportés par la composante catalytique A est présent dans le milieu de prépolymérisation A.
- lors d'une prépolymérisation AB, si nécessaire, au moins un cocatalyseur capable d'activer le ou les métaux de transition apportés par la composante catalytique A et le ou les métaux de transition apportés par la composante catalytique B est présent dans le milieu de prépolymérisation AB.
- lors d'une polymérisation, si nécessaire, au moins un cocatalyseur capable d'activer le ou les métaux de transition apportés par la composante catalytique A et le ou les métaux de transition apportés par la composante catalytique B est présent dans le milieu de polymérisation.

La présence du ou des cocatalyseurs dans les milieux de prépolymérisation ou polymérisation peut être assurée en ajoutant le ou les cocatalyseurs respectivement dans les milieux de prépolymérisation ou polymérisation. Cet ajout peut être réalisé au début desdites prépolymérisation ou polymérisation.

La présence du ou des cocatalyseurs dans les milieux de prépolymérisation ou polymérisation peut également être assurée avant prépolymérisation ou polymérisation, par imprégnation de la composante catalytique ou du prépolymère en présence de laquelle ou duquel on souhaite réaliser la prépolymérisation ou polymérisation.

Par ailleurs, il est également possible d'introduire lors de la prépolymérisation AB la quantité de cocatalyseur nécessaire ultérieurement à la polymérisation. Si l'on procède ainsi, le prépolymère AB peut contenir suffisamment de cocatalyseur pour qu'il ne soit plus nécessaire d'introduire de cocatalyseur pendant la polymérisation.

Par ailleurs, il est également possible d'introduire lors de la prépolymérisation A la quantité de cocatalyseur nécessaire ultérieurement à la prépolymérisation AB. Si l'on procède ainsi, le prépolymère A peut contenir suffisamment de cocatalyseur pour qu'il ne soit plus nécessaire d'introduire de cocatalyseur pendant la prépolymérisation AB.

Par ailleurs, il est également possible d'introduire lors de la prépolymérisation A la quantité de cocatalyseur nécessaire ultérieurement à la polymérisation et à la prépolymérisation AB. Si l'on procède ainsi, le prépolymère A peut contenir suffisamment de cocatalyseur pour qu'il ne soit plus nécessaire d'introduire de cocatalyseur pendant la polymérisation et pendant la prépolymérisation AB.

Si, par exemple, on utilise une composante catalytique contenant des atomes de magnésium, de chlore et de titane, on utilisera comme cocatalyseur dudit titane, de préférence un dérivé organique de l'aluminium.

Ce dérivé organique de l'aluminium peut être un dérivé de formule R¹R²R³Al dans laquelle R¹, R² et R³ pouvant être identiques ou différents, représentent chacun, soit un atome d'hydrogène, soit un atome d'halogène, soit un groupe alkyl contenant de 1 à 20 atomes de carbone, l'un au moins de R¹, R² ou R³ représentant un groupe alkyl. A titre d'exemple de composé adapté, on peut citer le dichlorure ou dibromure ou dihydrure d'éthylaluminium, le dichlorure ou dibromure ou dihydrure d'isobutylaluminium, le chlorure ou bromure ou hydrure de diéthylaluminium, le chlorure ou bromure ou hydrure de di-n propylaluminium, le chlorure ou bromure ou hydrure de diisobutylaluminium. De préférence aux composés précités, on utilise un trialkylaluminium tel que le tri-n-hexylaluminium, le triisobutylaluminium, le triméthylaluminium, ou le triéthylaluminium.

Le cocatalyseur peut également être un aluminoxane. Cet aluminoxane peut être linéaire, de formule 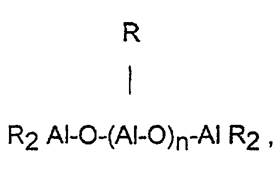 ou cyclique de formule 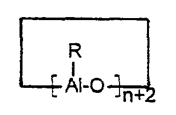 R représentant un radical alkyl comprenant de un à six atomes de carbone, et n étant un nombre entier allant de 2 à 40, de préférence de 10 à 20. L'aluminoxane peut comporter des groupements R de nature différente.

Les quantités de cocatalyseur utilisées, que ce soit lors d'une prépolymérisation ou de la polymérisation, doivent être suffisantes pour activer le ou les métaux de transition. Généralement, lorsqu'un dérivé organique de l'aluminium est utilisé comme cocatalyseur, on en introduit une quantité telle que le rapport atomique de l'aluminium apporté par le cocatalyseur sur le ou les métaux de transition que l'on souhaite activer aille de 0,5 à 10000 et de préférence de 1 à 1000.

Le dérivé organique de l'aluminium utilisé lors de l'étape b) destinée à réaliser l'agrégat peut être choisi parmi les dérivés liquides des dérivés organiques de l'aluminium qui viennent d'être cités comme possible cocatalyseur du titane.

Si ce dérivé organique de l'aluminium peut convenir comme cocatalyseur activant les métaux de transition apportés par la composante catalytique A, on peut introduire lors de l'étape b) suffisamment de dérivé organique de l'aluminium pour qu'il ne soit plus nécessaire d'ajouter de cocatalyseur devant activer les métaux de transition apportés par la composante catalytique A, lors de la prépolymérisation AB.

De même, si ce dérivé organique de l'aluminium peut convenir comme cocatalyseur activant les métaux de transition apportés par la composante catalytique A, on peut introduire lors de l'étape b) suffisamment de dérivé organique de l'aluminium pour qu'il ne soit plus nécessaire d'ajouter de cocatalyseur devant activer les métaux de transition de la composante catalytique A lors de la prépolymérisation AB, ni la polymérisation.

Si ce dérivé organique de l'aluminium peut convenir comme cocatalyseur activant les métaux de transition apportés par la composantes catalytique B, on peut introduire lors de l'étape b) suffisamment de dérivé organique de l'aluminium pour qu'il ne soit plus nécessaire d'ajouter de cocatalyseur devant activer les métaux de transition apportés par la composante catalytique B, lors de la prépolymérisation AB.

De même, si ce dérivé organique de l'aluminium peut convenir comme cocatalyseur activant les métaux de transition apportés par la composante catalytique B, on peut introduire lors de l'étape b) suffisamment de dérivé organique de l'aluminium pour qu'il ne soit plus nécessaire d'ajouter de cocatalyseur devant activer les métaux de transition de la composante catalytique B lors de la prépolymérisation AB, ni la polymérisation.

Au moins un donneur d'électrons peut être ajouté aux prépolymérisations ou polymérisations. Ce donneur d'électron peut être par exemple choisi parmi les bases de Lewis, les esters et polyesters d'acides oxygénés, les éthers et polyéthers, les amines, les composés du silicium tels que les silanes et les alkylalkoxysilanes de formule SiR¹R²(OR)₂, SiR¹(OR)₃ ou SiR¹R²R³(OR), R, R¹,R², R³ pouvant être identiques ou différents, étant des groupements hydrocarbonés contenant de 1 à 12 atomes de carbone, ainsi que parmi les composés du phosphore tels que les phosphates et les phosphonates, les préférés étant les esters ou polyesters alkylés d'acide aromatique, les mono ou diéthers d'alkyle, les alkoxysilanes et les alkylalkoxysilanes.

L'agrégat de l'étape b) est réalisé en ajoutant sur le prépolymère A d'abord un dérivé organique liquide de l'aluminium, puis la composante catalytique B. Cette opération est de préférence réalisée sous agitation. Généralement, on introduit ce dérivé organique liquide de l'aluminium en quantité telle que la masse obtenue reste pulvérulente et que le rapport molaire de l'aluminium ainsi ajouté sur le métal de transition contenu dans le prépolymère A aille de 1 à 1000.

Des polymères peuvent être obtenus par polymérisation d'au moins une oléfine en présence du prépolymère AB selon l'invention.

Les oléfines pouvant être utilisées, soit pour les prépolymérisations, soit pour la polymérisation peuvent être les alpha-oléfines comportant de deux à huit atomes de carbone, tel que l'éthylène ou le propylène, ou leurs mélanges. Les termes polymérisation et prépolymérisation dont il est fait usage dans la présente demande recouvrent donc des réactions de copolymérisation. Parmi les mélanges d'alpha-oléfine, on préfère un mélange d'éthylène et d'au moins une alpha-oléfine contenant de trois à huit atomes de carbone, le pourcentage d'éthylène dans le mélange étant généralement supérieur à 90 % en poids.

La prépolymérisation A est réalisée par prépolymérisation des oléfines précitées grâce aux procédés de polymérisation en suspension ou en phase gazeuse.

Phase La polymérisation en présence du prépolymère AB est réalisée par polymérisation des oléfines précitées grâce aux procédés de polymérisation en suspension ou en phase gazeuse.

Les procédés de polymérisation en suspension ou en phase gazeuse sont bien connus dans leur principe de l'homme du métier.

Un procédé de polymérisation en suspension consistent à réaliser une polymérisation en suspension dans un milieu inerte et notamment dans un hydrocarbure aliphatique tel que le n-heptane, le n-hexane, l'isohexane ou l'isobutane.

Les conditions opératoires pour ces procédés de polymérisation en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension, on peut opérer à des températures allant jusqu'à 250°C et sous des pressions allant de la pression atmosphérique à 250 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf -5)°C, et sous une pression telle que l'oléfine ou les oléfines soient essentiellement en phase vapeur.

Les procédés de polymérisation en suspension, ou en phase gazeuse peuvent faire intervenir un agent de transfert de chaînes, de manière à contrôler l'indice de fusion du prépolymère ou polymère à produire. L'agent de transfert de chaînes préféré est l'hydrogène, que l'on utilise en quantité pouvant aller jusqu'à 90 %, et se situant de préférence entre 0,1 et 60 % du nombre de moles de l'ensemble oléfines et hydrogène amené au réacteur.

De préférence, les prépolymérisations A et/ou AB sont réalisées à débit contrôlé de monomère, ledit débit pouvant être compris entre 0,1 et 500 g/h/millimole de métal de transition apporté respectivement par la composante catalytique A et/ou la composante catalytique AB.

On peut pondérer l'influence relative en polymérisation de la composante catalytique A et de la composante catalytique B en jouant sur le degré de prépolymérisation A. En augmentant le degré de prépolymérisation A, on diminue l'influence relative de la composante catalytique A lors de la polymérisation. Bien entendu, on peut également pondérer l'influence relative des composantes A et B en jouant sur les quantités de chacune de ces composantes. Généralement, le degré de prépolymérisation A est compris entre 0,5 et 500 grammes par millimole de métal de transition apporté par la composante catalytique A. Le degré d'avancement de la prépolymérisation AB est de préférence compris entre 0,5 et 1000 grammes par millimole de métal de transition apporté par la composante catalytique A et la composante catalytique B.

Dans les exemples qui suivent, les caractéristiques des prépolymères et des polymères synthétisés ont été déterminées par les techniques suivantes :
- Masse moléculaire moyenne en nombre (représentée par Mn) et masse moléculaire moyenne en poids (représentée par Mw) des polymères: les polymères ont été caractérisés par chromatographie d'exclusion stérique à l'aide d'un système analytique à détection réfractométrique similaire à celui décrit dans D. Lecacheux, Journal of Applied Polymer Science, volume 217, 4867 (1982). Les calculs ont été effectués à partir de masses moléculaires issues d'un étalonnage polystyrène et corrigés grâce aux lois de Mark Houwink. La polymolécularité des polymères est obtenu par le rapport de la masse moléculaire en poids sur la masse moléculaire en nombre. Ce rapport est représenté par Mw/Mn.
- Distribution des tailles de particules:
   elles sont évaluées par le calcul d'un paramètre appelé SPAN à l'aide de la formule suivante:
   SPAN = (D90 - D10)/D50, D90, D50 et D10 représentant les diamètres en-dessous desquels se trouvent respectivement 90 %, 50 % et 10 % en masse des particules. Dans le cas des particules de composante catalytique solide et de prépolymère, D90, D50 et D10 sont déterminés au moyen d'un granulomètre à laser MALVERN 1600. Dans le cas des particules de polymère, D90, D50 et D10 sont déterminés par tamisage.
- Indices de fluidité: norme ASTM 1238. MI₂ représente le poids de polymère en grammes écoulé en 10 minutes à travers une filière normalisée à 190°C et sous un poids de 2,1kg.

Dans les exemples qui suivent, la composante catalytique A est préparée comme le catalyseur 2 de l'exemple 1 de la demande de brevet français dont le numéro de dépôt est 86FR-004413 (FR-A-2.596.396). Cette composante catalytique est sensiblement sphérique et contient 2,2 % en poids de titane, 20,6 % en poids de magnésium. Son D50 est de 37 µm et son SPAN est de 0,48, ce qui traduit une distribution granulométrique resserrée.

Dans les exemples qui suivent, la composante catalytique B est préparée par cobroyage de MgCl2 anhydre et de TiCl4. Cette composante catalytique contient 3 % de titane et 22 % de magnésium. Son D50 est de 16 µm et son SPAN est de 4,8, ce qui traduit une distribution granulométrique large. La morphologie de cette composante catalytique est non contrôlée, c'est à dire sans axe de symétrie.

### Exemple 1

### a) Synthèse d'un prépolymère AB

Dans un réacteur de 2,5 litres équipé d'une double enveloppe pour réguler la température et d'un système d'agitation, on introduit à 60°C et sous atmosphère d'azote 0,75 litre d'hexane, 0,75 ml de trihexyl-aluminium (THA), 2,366 grammes de composante catalytique A. Le réacteur est pressurisé par 1 bar d'azote et 1,5 bar d'hydrogène, puis il est ensuite alimenté par un débit régulier d'éthylène pendant une heure à 60°C de façon à obtenir 120 grammes de prépolymère A.

Après avoir décomprimé le réacteur et éliminé le solvant par un balayage d'azote à 60°C, on ajoute au prépolymère A, sous azote et sous lente agitation, 4,6 ml de trihexylaluminium, puis 2,948 grammes de composante catalytique B. Le réacteur est de nouveau pressurisé par 1 bar d'azote, puis 1,5 bar d'hydrogène, puis est alimenté par un débit régulier d'éthylène pendant 2,5 heures de façon à obtenir, par prépolymérisation AB, 419 grammes d'un prépolymère AB (soit 79 grammes de prépolymère AB par gramme de composante catalytique A et B).

Le prépolymère AB contient 340 ppm de titane et 1034 ppm d'aluminium. Son D50 est de 159 µm et son SPAN de 0,93, ce qui traduit une distribution de tailles de particules étroites. Le prépolymère AB est de forme sensiblement sphérique et de composition sensiblement homogène.

### b) Polymérisation en présence du prépolymère AB

Le prépolymère AB dont la synthèse vient d'être décrite est engagé en polymérisation en suspension de la façon qui suit.

Dans un réacteur de 4 litres muni d'une régulation de température et d'une agitation, on introduit sous atmosphère d'azote et à température ambiante dans l'ordre : 1,5 litres d'hexane, 2,8 ml de triisobutylaluminium (TiBA) et 2,4 grammes de prépolymère AB dont la synthèse vient d'être décrite.

Le réacteur est pressurisé par 2 bars d'azote puis sa température est montée à 80°C. On introduit alors 4 bars d'hydrogène et l'on complète avec de l'éthylène en ajustant la pression totale à 13 bars. Cette pression est maintenue constante par addition d'éthylène pendant 3 heures, à la suite de quoi l'injection d'éthylène est stoppée et le réacteur est refroidit à 25°C. Le polymère est alors désactivé par ajout d'une solution de méthanol acide.

Après séchage à 80°C sous balayage d'azote, le polymère P₁ est isolé. On a obtenu 486 grammes de polymère P1, ce qui correspond à une productivité de 16000 grammes de polymère par gramme de composante catalytique A et B. Le polymère P1 est de morphologie contrôlée, est sensiblement homogène, et ne présente pas de fines particules.

Le polymère P1 présente en outre les caractéristiques suivantes :
SPAN = 0,73
D50 = 911 µm
MI2 = 1,4 g/10 min
Mw = 115 000 g/mole
Mw/Mn= 7,3

### Exemple 2 (comparatif)

### a) Synthèse d'un prépolymère

Dans un réacteur de 2,5 litres équipé d'une double enveloppe pour réguler la température et d'un système d'agitation, on introduit à 60°C sous atmosphère d'azote 0,75 litre d'hexane, 5 ml de trihexylaluminium, 2,48 grammes de la composante catalytique A et 2,92 g de la composante catalytique B. Le réacteur est pressurisé par 1 bar d'azote et 1,5 bar d'hydrogène, puis il est ensuite alimenté par un débit régulier d'éthylène pendant 3,5 heures de façon à obtenir 432 grammes de prépolymère, ce qui correspond à 80 grammes de prépolymère par gramme de composante catalytique A et B. Ce prépolymère que nous appelons prépolymère A+B contient 335 ppm de titane et 915 ppm d'aluminium. Il présente les caractéristiques suivantes :
D50 = 130 µm, SPAN = 1,75

La morphologie de ce prépolymère est hétérogène et est un mélange de grains dont les uns, sensiblement sphériques, proviennent de la composante catalytique A et les autres, sans morphologie, proviennent de la composante catalytique B.

### b) Synthèse d'un polymère

On engage 2,4 grammes du prépolymère A+B en polymérisation dans les mêmes conditions que pour la polymérisation décrite au b) de l'exemple 1. On obtient ainsi 465 grammes de polymère P₂, ce qui correspond à une productivité de 15500 grammes de polymère par gramme de composante catalytique A et B.

Le polymère P2 présente une morphologie hétérogène.

Ses autres caractéristiques sont les suivantes :
MI2 = 1,5 g/10 min
Mw = 113 000 grammes/mole
Mw/Mn = 7,1
D50 = 788 µm
SPAN = 2,03

### Exemple 3 (comparatif)

On engage 22 mg de composante catalytique A en polymérisation dans les mêmes conditions que pour la polymérisation décrite au b) de l'exemple 1. On obtient ainsi 227 grammes de polymère P₃ de morphologie sensiblement sphérique et présentant par ailleurs les caractéristiques suivantes :
D50 = 724 µm
SPAN = 0,25
MI2 =1,9 g/10 min
Mw = 105 000 grammes/mole
Mw/Mn = 5,9

### Exemple 4 (comparatif)

On engage 34 mg de composante catalytique B en polymérisation dans les mêmes conditions que pour la polymérisation décrite au b) de l'exemple 1. On obtient ainsi 696 grammes de polymère P₄ sans morphologie et présentant par ailleurs les caractéristiques suivantes :
D50 = 815 µm
SPAN = 1,54
MI2 = 1,5 g/10 min
Mw = 110 000 grammes/mole
Mw/Mn = 6,5

### Exemple 5 (comparatif)

Un mélange constitué de 12 mg de composante catalytique A et de 15 mg de composante catalytique B est engagé en polymérisation dans les mêmes conditions que celles de la polymérisation décrite à l'exemple 1.

On obtient ainsi 400 grammes de polyéthylène P₅ constitué d'un mélange de grains de forme sensiblement sphérique et de grains sans morphologie. Ce polymère P5 présente en outre les caractéristiques suivantes
D50 = 805 µm
SPAN = 2,28
MI2 = 1,4 g/10 min
Mw = 115 000 grammes/mole
Mw/Mn = 7

## Revendications

1. Procédé de préparation d'un prépolymère comprenant les étapes suivantes :
a) préparation d'un prépolymère A par prépolymérisation en suspension ou en phase gazeuse d'au moins une oléfine en présence d'une composante catalytique solide A, puis,
b) ajout d'un dérivé organique liquide de l'aluminium puis d'une composante catalytique solide B sur le prépolymère A pour obtenir un agrégat, puis,
c) prépolymérisation AB en phase gazeuse d'au moins une oléfine en présence de l'agrégat obtenu en b).

2. Procédé selon la revendication 1 **caractérisée en ce que** le dérivé organique de l'aluminium est un trialkylaluminium.

3. Procédé selon la revendication 1 ou 2 **caractérisé en ce que** la composante catalytique solide A et/ou la composante catalytique solide B contient un composé du titane capable de polymériser les oléfines.

4. Procédé selon l'une des revendications 1 à 3 **caractérisé en ce que** le rapport molaire du dérivé organique de l'aluminium ajouté à l'étape b) sur le métal de transition contenu dans le prépolymère A aille de 1 à 1000.

5. Procédé selon l'une des revendications 1 à 4 **caractérisé en ce que** les prépolymérisations A et/ou AB sont réalisées à débit contrôlé de monomère.

6. Prépolymère susceptible d'être obtenu par le procédé de l'une des revendications 1 à 5.

7. Procédé de polymérisation en suspension ou en phase gaz d'au moins une oléfine en présence du prépolymère de la revendication 6.

## Patentansprüche

1. Verfahren zur Herstellung eines Prepolymers, welches die folgenden Schritte umfasst:
a) Herstellung eines Prepolymers A durch Prepolymerisation A in Suspension oder Gasphase mindestens eines Olefins in Anwesenheit eines festen Katalysator-Bestandteils A, weiter
b) Hinzufügen eines flüssigen organischen Aluminium-Derivats und eines festen Katalysator-Bestandteils B zu dem Prepolymer A, um so ein Aggregat zu erhalten, weiter
c) Prepolymerisation AB in Gasphase mindestens eines Olefins in Anwesenheit des in b) hergestellten Aggregats.

2. Verfahren gemäß Anspruch 1, **dadurch gekennzeichnet, dass** das organische Aluminium-Derivat ein Trialkylaluminium ist.

3. Verfahren gemäß Anspruch 1 oder 2, **dadurch gekennzeichnet, dass** der feste Katalysator-Bestandteil A und/oder der feste Katalysator-Bestandteil B eine Titanverbindung enthält, welche geeignet ist, Olefine zu polymerisieren.

4. Verfahren gemäß einem der Ansprüche 1 bis 3, **dadurch gekennzeichnet, dass** das Molverhältnis des organischen Aluminium-Derivats, welches in Schritt b) dem im Prepolymer A enthaltenen Übergangsmetall hinzugefügt wird, zwischen 1 und 1000 liegt.

5. Verfahren gemäß einem der Ansprüche 1 bis 4, **dadurch gekennzeichnet, dass** die Prepolymerisationen A und/oder AB mit einem durch ein Monomer kontrollierten Durchsatz durchgeführt werden.

6. Prepolymer, welches durch ein Verfahren gemäß einem der Ansprüche 1 bis 5 hergestellt werden kann.

7. Polymerisationsverfahren in Suspension oder Gasphase mindestens eines Olefins in Anwesenheit des Prepolymers gemäß Anspruch 6.

## Claims

1. Method for preparing a prepolymer, comprising the following steps:
a) preparing a prepolymer A by suspension or gaseous phase prepolymerisation of at least one olefin in the presence of a solid catalytic component A, then
b) adding a liquid organic derivative of aluminium and then a solid catalytic component B to prepolymer A to obtain an aggregate, then
c) gaseous phase prepolymerisation AB of at least one olefin in the presence of the aggregate obtained in b).

2. Method according to claim 1, **characterised in that** the organic derivative of aluminium is a trialkyl aluminium.

3. Method according to claim 1 or 2, **characterised in that** solid catalytic component A and/or solid catalytic component B contains a titanium compound capable of polymerising olefins.

4. Method according to any of claims 1 to 3, **characterised in that** the molar ratio of the organic derivative of aluminium added in step b) to the transition metal contained in prepolymer A ranges from 1 to 1000.

5. Method according to any of claims 1 to 4, **characterised in that** prepolymerisations A and/or AB are carried out with controlled monomer flow.

6. Prepolymer obtained by the method claimed in any of claims 1 to 5.

7. Method for the suspension or gas phase polymerisation of at least one olefin in the presence of the prepolymer of claim 6.
